# EUROPÄISCHE PATENTSCHRIFT

(11) **EP 1 006 397 B1**
(45) Veröffentlichungstag und Bekanntmachung des Hinweises auf die Patenterteilung: **03.03.2004**
(21) Anmeldenummer: 99124103.5
(22) Anmeldetag: 02.12.1999
(51) Int. Cl.: G03B 17/14

(54) **Objektiv für eine Kamera**
Camera lens
Objectif pour une caméra

(30) Priorität: 04.12.1998 DE 19855977
(43) Veröffentlichungstag der Anmeldung: 07.06.2000
(73) Patentinhaber: Rollei Fototechnic GmbH, 38126 Braunschweig (DE)
(72) Erfinder: Hartung, Hansjürgen, 38302 Wolfenbüttel (DE)
(74) Vertreter: Gramm, Werner, Prof. Dipl.-Ing.

(56) Entgegenhaltungen:
- US-A- 4 440 484
- US-A- 4 541 700
- US-A- 4 637 704

## Beschreibung

Die Erfindung betrifft eine Kamera, insbesondere Systemkamera, mit einem Kameragehäuse und einem Wechselobjektiv, das mit einer Anschlusseinrichtung, inbesondere einem Bajonettaufsatz, in einer Verbindungseinrichtung des Kameragehäuses, insbesondere einer Bajonettaufnahme, auswechselbar anrenkbar ist.

Ein derartiges Objektiv kann über die üblicherweise als Bajonett ausgebildete Anschlusseinrichtung auf ein Kameraghäuse einer Kamera aufgesetzt werden und über das Kameragehäuse mit Strom versorgt werden. Solche Objektive sind insbesondere für Systemkameras mit austauschbaren Objektiven (Wechselobjektiven), wie z.B. Spiegelreflexsystemkameras und Suchersystemkameras, interessant, bei denen die Objektive für den Transport der Spiegelreflexkamera vom Kameragehäuse entfernt werden können und insbesondere auch den wahlweisen Einsatz verschiedener Objektive je nach der erforderlichen Bildeinstellung ermöglichen. Die Objektive weisen im Allgemeinen elektrische Verbraucher, wie zum Beispiel eine elektrisch betätigbare Fokusverstelleinrichtung und eine elektrisch betätigbare Blendenverstelleinrichtung auf. Das Objektiv und das Kameragehäuse weisen mehrere elektrische Kontakte auf, von denen einige zur Stromversorgung des Objektivs und andere zur Übertragung von Signalen zwischen dem Objektiv und dem Kameragehäuse für die Auswahl der verschiedenen Objektiveinstellungen dienen. Die elektrischen Kontakte sind dabei in dem ringförmigen Bereich des Bajonettverschlusses um den optischen Pfad des zylinderförmigen Objektivs herum angeordnet.

Derartige Kameraobjektive sind z.B. aus der US 4 637 704A oder der US 4 440 484A bekannt.

Da die elektrischen Kontakte an dem Objektiv und dem Kameragehäuse im Wesentlichen ringförmig nebeneinander angeordnet sind, kann es bei dem Anrenken eines Objektivs an das Kameragehäuse zu unerwünschten kurzzeitigen elektrischen Verbindungen zwischen Kontakten kommen, die nicht miteinander verbunden werden sollen. Durch diese kurzzeitigen elektrischen Verbindungen können Kurzschlüsse und Fehlverbindungen ausgelöst werden, die unter Umständen zu einer Beschädigung von elektronischen Teilen des Objektivs oder Kameragehäuses führen können oder Funktionsstörungen in den Verstelleinrichtungen des Objektivs bewirken. Weiterhin können durch in den Verbindungsbereich eintretenden Schmutz oder Feuchtigkeit die Kontakte abgenutzt und blockiert werden.

Aus der US 4 541 700A ist es bekannt, nur 1 oder zwei Kontaktpunkte zur Stromversorgung sowie zur Datenübertragung zu benutzen.

Der Erfindung liegt die Aufgabe zugrunde, die eingangs genannte Kamera dahingehend weiterzubilden, dass eine relativ einfache Verbindung zwischen Objektiv und Kameragehäuse bei gleichzeitig hoher Funktions- und Störsicherheit gewährleistet werden kann.

Diese Aufgabe wird erfindungsgemäß gelöst durch eine Kamera, insbesondere Systemkamera, mit einem Kameragehäuse und einem Wechselobjektiv, das mit einer Anschlusseinrichtung, inbesondere einem Bajonettaufsatz, in einer Verbindungseinrichtung des Kameragehäuses, insbesondere einer Bajonettaufnahme, auswechselbar anrenkbar ist, wobei für die Stromversorgung elektrischer Stelleinrichtungen im Wechselobjektiv die Verbindungseinrichtung des Kameragehäuses nur zwei Stromversorgungskontakte aufweist, denen in der Anschlusseinrichtung des Wechselobjektives zwei Anschlusskontakte zugeordnet sind, dadurch gekennzeichnet, daß zür Übertragung von Steuersignalen vom Wechselobjektiv auf das Kamergehäuse und/oder umgekehrt in der Schnittstelle ausschließlich eine Optokopplung vorgesehen ist, die jeweils einen optischen Signalgeber und einen diesem zugeordneten Signalaufnehmer aufweist.

Erfindungsgemäß wird somit die Signalübertragung von der Stromversorgung getrennt, indem eine Optokopplung zur Signalübertragung verwendet wird. Hierdurch kann kein unerwünschter Kontakt zwischen den Signalanschlüssen und Stromversorgungsanschlüssen des Objektivs und des Kameragehäuses beim Einrenken des Objektivs mehr auftreten. Zwischen den elektrischen Kontakten der Stromversorgung und den optischen Mitteln kann grundsätzlich weder Strom noch eine Information übertragen werden.

Zwar kann grundsätzlich zwischen den zwei Anschlusskontakten des Objektivs und den zwei Stromversorgungskontakten des Kameragehäuses ein kurzzeitiger Fehlanschluss auftreten, bei denen ein Kontakt des Objektivs den falschen Kontakt des Kameragehäuses berührt und die anderen Kontakte freiliegen. Da in einem derartigen Fall jedoch kein Stromkreis geschlossen wird, kann hierbei auch kein Strom fließen. Somit kann bei einer erfindungsgemäßen Ausbildung des Objektivs bzw. einer Kamera mit einem derartigen Objektiv kein Kurzschluss mehr ausgelöst und keine Fehlinformation mehr übertragen werden.

Bei der optischen Signalübertragung können vorteilhafterweise die optische Signalabgabe und die optische Signalaufnahme getrennt werden, indem jeweils ein Anschluss lediglich für die Signalabgabe und ein anderer lediglich für die Signalaufnahme genutzt wird. Dies kann insbesondere durch die Verwendung von Leuchtdioden zur Signalaussendung und Fotodioden zur Signalaufnahme erreicht werden.

In der Zeichnung ist eine als Beispiel dienende Ausführungform der Erfindung dargestellt. Es zeigen
- **Figur 1**: eine als Bajonettaufsatz ausgebildete Anschlusseinrichtung eines Wechselobjektivs,
- **Figur 2**: in gegenüber Figur 1 kleinerem Maßstab ein Wechselobjektiv mit einem Bajonettaufsatz gemäß Figur 1 und
- **Figur 3**: in schematischer Darstellung ein Kameragehäuse mit einer Bajonettaufnahme.

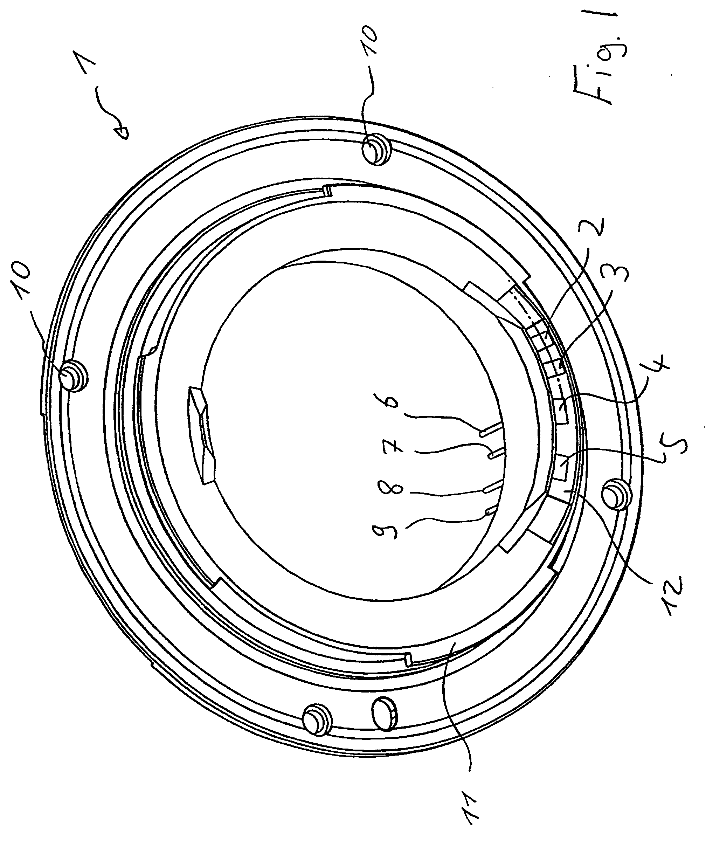

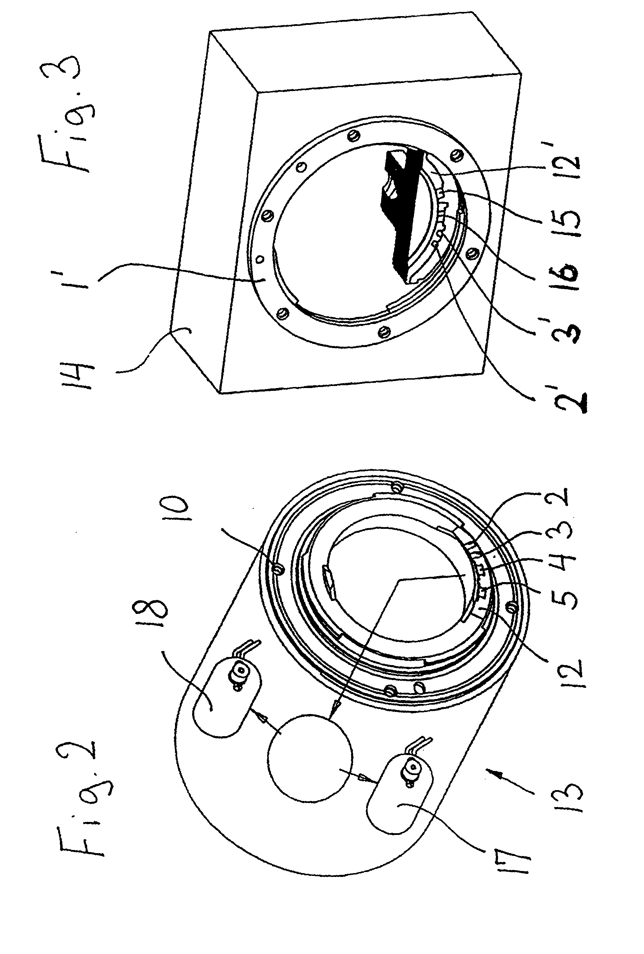

Ein Bajonettaufsatz 1 kann über Schraubenlöcher 10 an dem Körper eines Wechselobjektivs 13 befestigt werden. Der Bajonettaufsatz 1 weist in bekannter Weise radial nach außen ragende Vorsprünge 11 auf und kann in einer Bajonettaufnahme 1' eines Kameragehäuses 14 einer Systemkamera, wie z.B. einer Spiegelreflexkamera oder einer Suchsystemkamera, angerenkt werden. An einer Anschlussfläche 12 des Bajonettaufsatzes 1 sind elektrische Anschlusskontakte 2, 3 angeordnet. Neben ihnen sind eine Infrarot-Leuchtdiode (IR-LED) 4 und eine Infrarot-Fotodiode 5 in der Anschlussfläche 12 vorgesehen. Die Anschlusskontakte 2, 3 und die als optische Anschlussmittel dienende Leuchtdiode 4 und Fotodiode 5 sind innerhalb der Anschlussfläche 12 ringförmig voneinander beabstandet. Bei Befestigung des Bajonettaufsatzes 1 an dem Objektivkörper können die Leuchtdiode 4 über die Stifte 6, 7 und die Fotodiode 5 über die Stifte 8, 9 an den Objektivkörper angeschlossen werden. Die elektrischen Anschlusskontakte 2, 3 werden mit dem Objektivkörper ebenfalls über nicht gezeigte elektrische Kontakte verbunden.

An einer entsprechenden Anlagefläche 12' in der Bajonettaufnahme 1' des Kameragehäuses 14 sind eine IR-Leuchtdiode 15, eine IR-Fotodiode 16 und zwei Stromversorgungskontakte 2', 3' derartig angeordnet, dass bei Einbau des Objektivbajonetts 1 in das Kameragehäuse 14 die gehäuseseitige Leuchtdiode 15 der Fotodiode 5, die gehäuseseitige Fotodiode 16 der Leuchtdiode 4 und die Stromversorgungskontakte 2', 3' den Anschlusskontakten 2, 3 gegenüberliegen. Somit kann eine Stromversorgung für elektrische Stelleinrichtungen im Wechselobjektiv, wie zum Beispiel eine elektrisch betätigbare Fokusverstelleinrichtung 17 und/oder eine elektrisch betätigbare Blendenverstelleinrichtung 18 über die Anschlusskontakte 2, 3 gewährleistet werden. Die vom Wechselobjektiv 13 auszusendenden elektrischen Signale werden über die Stifte 6, 7 der Leuchtdiode 4 zugeführt, in optische bzw. IR-Signale umgewandelt, die von der Fotodiode 16 des Kameragehäuses 14 aufgenommen und in elektrische Signale umgewandelt werden; entsprechend werden von der Leuchtdiode (LED) 15 des Kameragehäuses 14 ausgesendete (IR-)Lichtsignale von der Fotodiode 5 aufgenommen, in elektrische Signale umgewandelt und über die Stifte 8, 9 zu den Stelleinrichtungen 17, 18 weitergeleitet. Da die Signalaufnahme des Wechselobjektivs 13 über die Fotodiode 5 und die Signalabgabe über die Leuchtdiode 4 voneinander getrennt sind, ist eine schnelle Datenübertragung gewährleistet.

Das Wechselobjektiv 13 mit Bajonettaufsatz 1 wird in bekannter Weise an die Bajonettaufnahme 1' des Kameragehäuses 14 angerenkt, indem es zunächst axial aufgesetzt und anschließend verdreht wird.

## Patentansprüche

1. Kamera, insbesondere Systemkamera, mit einem Kameragehäuse (14) und einem Wechselobjektiv (13), das mit einer Anschlusseinrichtung (1), inbesondere einem Bajonettaufsatz, in einer Verbindungseinrichtung (1') des Kameragehäuses (14), insbesondere einer Bajonettaufnahme, auswechselbar anrenkbar ist, wobei für die Stromversorgung elektrischer Stelleinrichtungen (17, 18) im Wechselobjektiv (13) die Verbindungseinrichtung (1') des Kameragehäuses (14) nur zwei Stromversorgungskontakte (2', 3') aufweist, denen in der Anschlusseinrichtung (1) des Wechselobjektives (13) zwei Anschlusskontakte (2, 3) zugeordnet sind, **dadurch gekennzeichnet, daß** zur Übertragung von Steuersignalen vom Wechselobjektiv (13) auf das Kamergehäuse (14) und/oder umgekehrt in der Schnittstelle (1, 1') ausschließlich eine Optokopplung vorgesehen ist, die jeweils einen optischen Signalgeber (4, 15) und einen diesem zugeordneten Signalaufnehmer (5, 16) aufweist.

2. Kamera nach Anspruch 1, **dadurch gekennzeichnet, dass** der optische Signalgeber zumindest eine Leuchtdiode (4, 15) und der optische Signalaufnehmer zumindest eine Fotodiode (5, 16) aufweisen.

3. Kamera nach Anspruch 1 oder 2, **dadurch gekennzeichnet, dass** der in der Anschlusseinrichtung (1) des Wechselobjektives (13) angeordnete optische Signalgeber (4) und/oder Signalaufnehmer (5) über elektrische Kontakte (6, 7, 8, 9), vorzugsweise Stiftkontakte, mit dem Objektivkörper elektrisch verbunden sind.

4. Kamera nach Anspruch 1, 2 oder 3, **dadurch gekennzeichnet, dass** das Wechselobjektiv (13) eine elektrisch betätigbare Fokusverstelleinrichtung (17) aufweist.

5. Kamera nach einem der vorhergehenden Ansprüche, **dadurch gekennzeichnet, dass** das Wechselobjektiv (13) eine elektrisch betätigbare Blendenverstelleinrichtung (18) aufweist.

## Claims

1. Camera, in particular system camera, with a camera housing (14) and an interchangeable lens (13), which can be interchangeably fitted by means of a connection device (1), in particular a bayonet attachment, in a connecting device (1') of the camera housing (14), in particular a bayonet receptacle, in which, for supplying power to electrical actuating devices (17, 18) in the interchangeable lens (13), the connecting device (1') of the camera housing (14) has only two power supply contacts (2', 3'), to which two connection contacts (2, 3) are assigned in the connection device (1) of the interchangeable lens (13), **characterized in that** exclusively one optocoupling is provided in the interface (1, 1') for the purpose of transmitting control signals from the interchangeable lens (13) to the camera housing (14) and/or vice versa, said optocoupling in each case having an optical signal transmitter (4, 15) and a signal pickup (5, 16) assigned thereto.

2. Camera according to claim 1, **characterized in that** the optical signal transmitter has at least one light emitting diode (4, 15) and the optical signal pickup has at least one photodiode (5, 16).

3. Camera according to claim 1 or 2, **characterized in that** the optical signal transmitter (4) and/or signal pickup (5) arranged in the connection device (1) of the interchangeable lens (13) are electrically connected to the lens body via electrical contacts (6, 7, 8, 9), preferably pin contacts.

4. Camera according to claim 1, 2, or 3, **characterized in that** the interchangeable lens (13) has an electrically actuable focus adjusting device (17).

5. Camera according to one of the preceding claims, **characterized in that** the interchangeable lens (13) has an electrically actuable aperture adjusting device (18).

## Revendications

1. Appareil de prise de vues, en particulier appareil de système, comprenant un boîtier d'appareil (14) et un objectif interchangeable (13), qui peut être enclenché de manière interchangeable par un dispositif de raccordement (1), en particulier une bague à baïonnette, dans un dispositif de liaison (1') du boîtier (14), en particulier une monture à baïonnette, tandis que pour l'alimentation en courant de dispositifs de réglage électriques (17, 18) dans l'objectif interchangeable (13), le dispositif de liaison (1') du boîtier (14) ne comporte que deux contacts d'alimentation en courant (2', 3'), auxquels sont associés deux contacts de raccordement (2, 3) dans le dispositif de raccordement (1) de l'objectif interchangeable (13), **caractérisé en ce que** pour la transmission de signaux de commande de l'objectif interchangeable (13) au boîtier (14) et/ou inversement, il est prévu à la jonction (1, 1') exclusivement un optocouplage, qui comporte un émetteur de signal optique (4, 15) et un récepteur de signal (5, 16) qui lui est associé.

2. Appareil selon la revendication 1, **caractérisé en ce que** l'émetteur de signal optique comprend au moins une diode luminescente (4, 15) et le récepteur de signal optique au moins une photodiode (5, 16).

3. Appareil selon la revendication 1 ou 2, **caractérisé en ce que** l'émetteur de signal (4) et/ou le récepteur de signal (5) optique disposés dans le dispositif de raccordement (1) de l'objectif interchangeable (13) sont reliés électriquement avec le corps de l'objectif par l'intermédiaire de contacts électriques (6, 7, 8, 9), de préférence des contacts à broche.

4. Appareil selon la revendication 1, 2 ou 3, **caractérisé en ce que** l'objectif interchangeable (13) comporte un dispositif de réglage de distance actionné électriquement (17).

5. Appareil selon l'une des revendications précédentes, **caractérisé en ce que** l'objectif interchangeable (13) comprend un dispositif de réglage de diaphragme (18) actionné électriquement.
